# EUROPEAN PATENT SPECIFICATION

(11) **EP 3 966 738 B1**
(45) Date of publication and mention of the grant of the patent: **20.08.2025**
(21) Application number: 20806045.9
(22) Date of filing: 08.05.2020
(51) Int. Cl.: G06F 18/10

(54) **DYNAMIC DATA CORRECTION METHOD AND APPARATUS FOR GENERATING A HIGH RESOLUTION SPECTRUM**
VERFAHREN UND VORRICHTUNG ZUR DYNAMISCHEN DATENKORREKTUR ZUR ERZEUGUNG EINES HOCHAUFLÖSENDEN SPEKTRUMS
PROCÉDÉ ET APPAREIL DE CORRECTION DE DONNÉES DYNAMIQUES POUR GÉNÉRER UN SPECTRE À HAUTE RÉSOLUTION

(30) Priority: 10.05.2019 US 201962845886 P
(43) Date of publication of application: 16.03.2022
(73) Proprietor: Academia Sinica, Taipei 115 (TW)
(72) Inventor: WANG, Yi-Sheng, Taipei, 115 (TW); HSIAO, Chih- Hao, Taipei, 115 (TW); SHIH, Ming-Che, Culver City, CA 90230 (US)
(74) Representative: Lang, Christian
(86) International application number: PCT/US2020/031978
(87) International publication number: WO 2020/231764

(56) References cited:
- US-A1- 2007 158 542
- US-A1- 2007 158 542
- US-A1- 2011 054 804
- US-A1- 2011 054 804

## Description

### BACKGROUND OF THE INVENTION

### 1. FIELD OF THE INVENTION

The present disclosure in general relates to the field of data analysis. More particularly, the present disclosure relates to data acquisition methods and apparatus for reducing errors and improving spectral quality in spectroscopic measurements.

### 2. DESCRIPTION OF RELATED ART

Spectrometry based on different underlying principles is widely used in analytical chemistry field for various purposes. For example, mass spectrometry (MS), by ionizing chemical species and sorting the ions based on their mass-to-charge ratio (m/z), can identify and/or quantify samples such as pure substance as well as complex mixtures. The resulting data of MS, a mass spectrum, is exhibited in a plot format showing the ion signal as a function of the mass-to-charge ratio which is representing the mass of a sample. Due to a wide range of analytical capability, MS is especially suitable for analyzing biological samples, environmental substances, medical compounds, foods, etc.. For example, document US 2007/0158542 A1 deals with conventional processing methods of data obtained by mass spectrometry. Further, document US 2011/0054804 A1 relates to a method of improving resolution of compounds eluted from a chromatography device.

However, the original spectra obtained from a spectrometer usually contain errors or tiny changes in spectral features due to condition variations in every data acquisition event, which together result in run-to-run data fluctuation. This fluctuation will then cause distortion and shift of peaks in the spectra. All analytical instruments integrate the data of multiple acquisition events to improve the signal quality before saving the data. Once the integrated data is saved, users can no longer access the data of individual acquisition events. Such distortion and shift of peaks will impair the resolution and accuracy of the spectra, and will become intrinsic properties of the peaks after spectral integration, so that the resolution and accuracy of the integrated spectrum will then be difficult to improve. The situation is prominent in high-resolution spectra because the spectral features are sharp and very sensitive run-to-run fluctuation.

Accordingly, it is necessary to remove imperfection of every single-scan (SS) spectrum caused by errors before spectral integration. Nevertheless, several standard calibrations, such as 2-D alignment or generalized rank annihilation method currently used to correct systematic errors, or other data acquisition analyses (e.g., I Coshift, correlation optimized warping, parametric time warping, and semi-parametric time warping) used to restore the spectral quality after multiple spectra integrated, do not deal with errors before spectral integration.

In view of the foregoing, there exists in the related art a need for a general effective tool to enhance the spectral quality by correcting errors before spectral integration, especially in a fast and real-time manner, so that subsequent spectral data interpretation is improved.

### SUMMARY

The following presents a simplified summary of the disclosure in order to provide a basic understanding to the reader. This summary is not an extensive overview of the disclosure and it does not identify key/critical elements of the present invention or delineate the scope of the present invention. Its sole purpose is to present some concepts disclosed herein in a simplified form as a prelude to the more detailed description that is presented later.

The present disclosure aims at providing a dynamic data correction (DDC) method and an apparatus for carrying out such method, so that errors are reduced and a high-resolution and high-quality spectrum is generated. This method is different from other data correction methods that only conduct the correction after the integrated data sets are saved (also known as an off-line correction approach). The DDC method can be performed in high speed because the correction only applies locally to the data points close to peaks, instead of to the entire spectrum as most correction methods do. This approach allows the DDC method to perform high-speed real-time data correction by analyzing every single acquisition event. This unique feature is not achievable with other conventional data correction methods.

Accordingly, one aspect of the disclosure is directed to a computer implemented method for generating a high-resolution spectrum from a plurality of SS spectra independently obtained from a spectrometer according to claim 1. The method comprises,
(a) providing a reference spectrum;
(b) finding a target peak consisting of a plurality of data points with each of the data points having a x coordinate from one of the plurality of SS spectra within a first interval (Δe), in which the first interval (Δe) is determined by the width of a corresponding reference peak in the reference spectrum at 1-99% of the reference peak height;
(c) aligning the target peak found in the step (b) with the corresponding reference peak;
(d-1) by moving the data points that are independently above a threshold relative to the peak maximum of the aligned target peak of the step (c) via interpolation, and resampling the moved data points at the x coordinates of the initial single-scan (SS) spectra ; or
(d-2) by moving the data points that are independently above a threshold relative to the peak maximum of the aligned target peak of the step (c) linearly with the peak maximum, and resampling the moved data points at the x coordinates of the initial single-scan (SS) spectra ;
(e) repeating the steps (b) to (d-1) or the steps (b) to (d-2) until no target peak is found in the step (b) and generating a corrected SS spectrum;
(f) repeating the step (e) for each single-scan (SS) spectrum to produce the plurality of the corrected SS spectra; and
(g) integrating the plurality of the corrected SS spectra of step (f) and thereby generating the high-resolution spectrum.

According to some embodiments of the present disclosure, in the step (a), the reference spectrum is generated by integrating the plurality of SS spectra.

In the step (b), the maximum intensity of the target peak may be above the background noise.

According to certain preferred embodiments of the present disclosure, in the step (b), if more than one peaks are identified within the first interval (Δe), then select the one with the highest intensity or closest to the reference peak as the target peak.

According to certain preferred embodiments of the present disclosure, in the step (c), the peak maximum of the found target peak of the step (b) is aligned with the peak maximum of the corresponding reference peak. According to certain preferred embodiments of the present disclosure, in the step (c), the peak maximum of the found target peak of the step (b) is aligned with the center of the width of the reference peak at 1-99% *(e.g.,* 80%) of the peak height.

According to certain embodiments of the present disclosure, in the steps (d-1) or (d-2), only the data points of the target peak in a second interval (Δb) are used in the interpolation (such as spline interpolation), in which the second interval (Δb) is greater or equal to the first interval (Δe).

According to certain embodiments of the present disclosure, the interpolation of the step (d-1) is spline interpolation.

According to some preferred embodiments of the present disclosure, in the steps (d-1) or (d-2), the threshold is 1% of the peak maximum of the aligned target peak of the step (c); preferably, the threshold is 20% of the peak maximum of the aligned target peak of the step (c).

According to some embodiments of the present disclosure, the SS spectra is a mass spectrum, an optical spectrum, a nuclear magnetic resonance spectrum, an ion-mobility spectrum, a Rutherford backscattering spectrum, a neutron triple-axis spectrum, and a Raman spectrum.

Another aspect of the present disclosure pertains to an apparatus for generating a high-resolution spectrum according to claim 13. The apparatus comprises a processor, and a tangible memory operably linked to the processor. The tangible memory is configured to store spectra and instructions for implementing the present DDC method described above, while the processor is configured to execute the instructions stored in the tangible memory.

Many of the attendant features and advantages of the present disclosure will become better understood with reference to the following detailed description considered in connection with the accompanying drawings.

### BRIEF DESCRIPTION OF THE DRAWINGS

These and other features, aspects and advantages of the present invention will become better understood with reference to the following description, appended claims and the accompanying drawings, where:

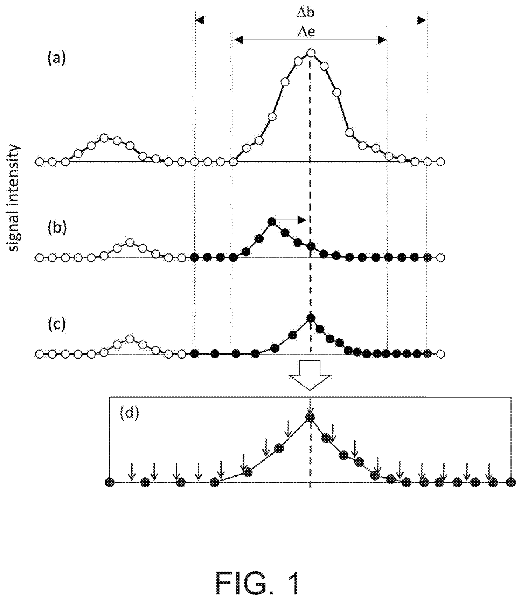

FIG. 1 is a diagram illustrating the principal peak alignment procedure of DDC method of the present disclosure. Panel (a) a representative reference peak in the reference spectrum used to define the Δe and Δb; panel (b) a representative target peak before peak alignment in an uncorrected SS spectrum; panel (c) the same target peak of panel (b) after peak alignment in the same SS spectrum; panel (d) the resampling process after peak alignment. The dashed line throughout panels (a) to (d) represents the reference position, the arrow in panel (b) indicates the shift distance of the center of the target peak of panel (b), the black data points in panels (c) and (d) represent the data points adjusted by the present DDC, and inverted triangle marks in panel (d) represent the data points obtained after the resampling process;

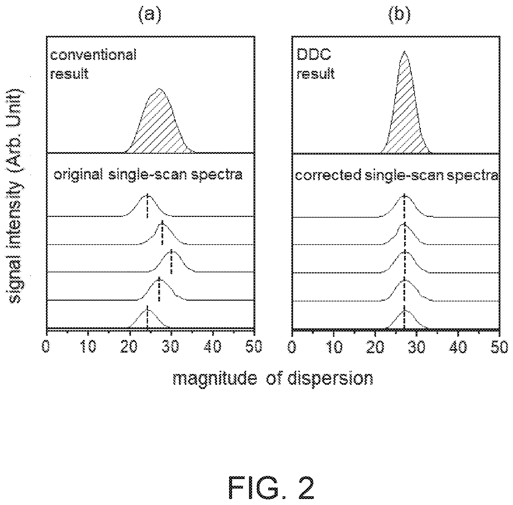

FIG. 2 is a diagram illustrating the effect of before (panel (a)) and after (panel (b)) using the DDC method of the present disclosure on the resolution of the integrated spectrum. A vertical dash line of a peak in the single-scan data represents the position of the peak. The peak in panel (b) with hatched under-curve area shown in the integrated spectrum is the integrated spectrum of panel (a); and

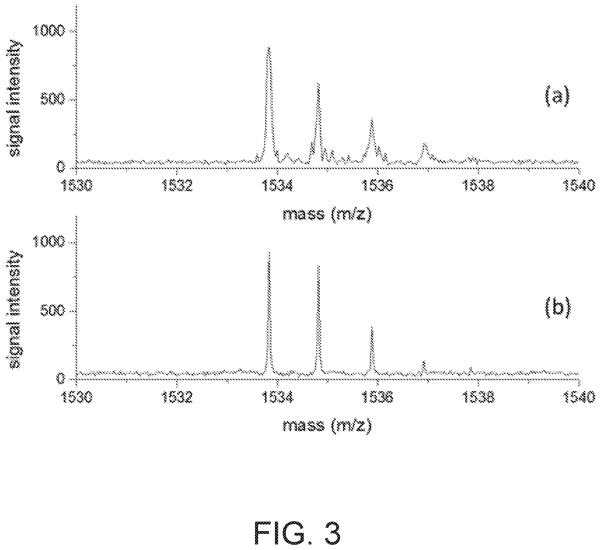

FIG. 3 illustrates original and corrected mass spectra of a polypeptide standard, P14R, obtained by the matrix-assisted laser desorption/ionization time-of-flight (MALDI-TOF) MS in accordance with one embodiment of the present disclosure. Panel (a) the original spectrum after integration of 50 uncorrected SS spectra; panel (b) the corrected spectrum after integration of the 50 SS spectra of panel (a) with each of them corrected using the DDC method of the present disclosure.

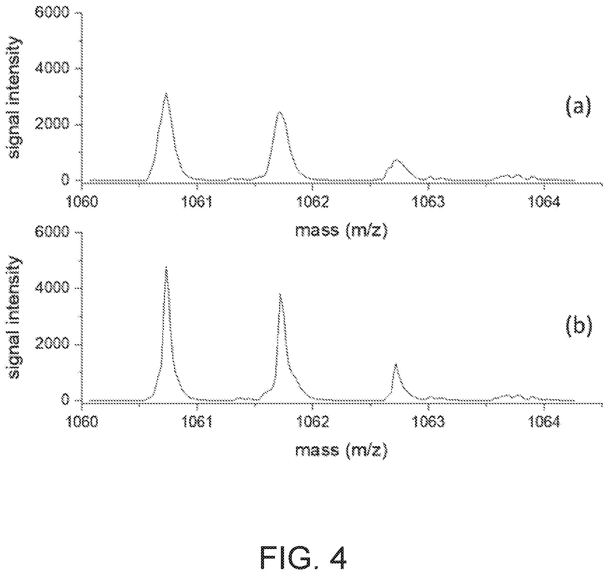

FIG. 4 illustrates original and corrected mass spectra of Bradykinin, obtained by the MALDI-TOF MS in accordance with one embodiment of the present disclosure. Panel (a) the original spectrum after integration of the uncorrected SS spectra; panel (b) the corrected spectrum after integration of the SS spectra of panel (a) with each of them corrected using the DDC method of the present disclosure.

### DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

### I. Definition

For convenience, certain terms employed in the specification, examples and appended claims are collected here. Unless otherwise defined herein, scientific and technical terminologies employed in the present disclosure shall have the meanings that are commonly understood and used by one of ordinary skill in the art. Also, unless otherwise required by context, it will be understood that singular terms shall include plural forms of the same and plural terms shall include the singular. Specifically, as used herein and in the claims, the singular forms "a" and "an" include the plural reference unless the context clearly indicates otherwise. Also, as used herein and in the claims, the terms "at least one" and "one or more" have the same meaning and include one, two, three, or more.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages such as those for quantities of materials, durations of times, temperatures, operating conditions, ratios of amounts, and the likes thereof disclosed herein should be understood as modified in all instances by the term "about". Accordingly, unless indicated to the contrary, the numerical parameters set forth in the present disclosure and attached claims are approximations that can vary as desired. At the very least, each numerical parameter should at least be construed in light of the number of reported significant digits and by applying ordinary rounding techniques.

The term "spectrum" as used herein refers to signal that can be measured or decomposed along a continuous variable such as energy in electron spectroscopy or mass-to-charge ratio in mass spectrometry. Spectrum is also referred as a graphical representation of the signal as a function of the dependent variable. An exemplary spectrum that may be processed by the DDC method of the present disclosure includes, but is not limited to, a mass spectrum, an optical (*i.e.,* absorption, fluorescence, scattering, emission, phosphorescence) spectrum in a range of ultraviolet, visible or infrared light, a nuclear magnetic resonance spectrum, an ion-mobility spectrum, a Rutherford backscattering spectrum, a neutron triple-axis spectrum, and a Raman spectrum. In one preferred embodiment, the spectrum of the present disclosure is a mass spectrum.

As used herein, the term "mass spectrometry" or "MS" refers to an analytical technique to identify compounds by their mass. MS refers to methods of filtering, detecting, and measuring ions based on their mass-to-charge ratio, or "m/z". MS technology generally includes (1) ionizing the compounds to form charged compounds; and (2) separating or sorting the charged compounds in an analyzer; and (3) detecting the separated charged compounds and calculating the mass-to-charge ratio. The compounds may be ionized, separated, and detected by any suitable means. A "mass spectrometer" generally includes an ionizer, a mass analyzer, and an ion detector. In general, one or more molecules of interest are ionized, and the ions are introduced into a mass spectrographic instrument where, due to magnetic and/or electric fields, the ions follow a path in space that is dependent upon mass ("m") and charge ("z"). In one specific example, the MS performed in the present disclosure is achieved via a MALDI-TOF mass spectrometer.

The term "resolving power" or "RP" refers to a measure of the ability to distinguish two peaks that are very close to each other in the spectral data of the present disclosure. For example, in a mass spectrum, RP is a measure of the ability to distinguish two peaks of slightly different mass-to-charge ratios.

The term "signal-to-noise ratio" or "SNR" refers to a measure that compares the level of a desired signal to the level of background noise. In the spectrum of the present disclosure, the threshold of SNR may be pre-determined so as to distinguish whether a peak is a signal or a noise accordingly.

The term "target peak" as used herein refers to a peak with the maximum intensity (the y coordinate) above the pre-determined threshold of SNR *(i.e.,* above the background noise). Also, the target peaks in the reference spectrum of the present disclosure are referred as "reference peaks." Furthermore, the term "reference position" refers to the position where a reference peak is located.

The term "resampling" as used herein refers to the data points after alignment to retrieve the x coordinate with their original x coordinate (*i.e*., the first x coordinate). Alternatively, "resampling the data points with the first x coordinate" refers to "associating the data points with the first x coordinate."

The term "error" as used herein refers to the deviation in x coordinate of a target peak in a SS spectrum within the interval Δe in the reference spectrum.

The terms "integrate, integrating and/or integration" as used herein refer to overlaying a plurality of SS spectra, which may be or may be not corrected by the present method, and adding or averaging with any preferential weighting factor the overlaying data points to give an integrated spectrum that is a summation of the plurality SS spectra. Alternatively, the terms "integrate, integrating and/or integration" also refers to averaging each of the summated data points of a plurality of SS spectra and thereby gives an integrated spectrum.

### II. Description of The Invention

### 2.1. The present Dynamic Data Correction (DDC) method

This invention aims at generating a high-resolution and high-quality spectrum from a plurality of SS spectra via adjusting data points of a target peak in each SS spectra through the present dynamic data correction (DDC) method. The present DDC method comprises steps of:
(a) providing a reference spectrum;
(b) finding a target peak consisting of a plurality of data points with each of the data points having a x coordinate from one of the plurality of SS spectra within a first interval (Δe), in which the first interval (Δe) is determined by the width of a corresponding reference peak in the reference spectrum at 1-99% of the reference peak height;
(c) aligning the found target peak of the step (b) with the corresponding reference peak;
(d-1) by moving the data points that are independently above a threshold relative to the peak maximum of the aligned target peak of the step (c) via interpolation, and resampling the moved data points at the x coordinates of the initial single-scan (SS) spectra ; or
(d-2) by moving the data points that are independently above a threshold relative to the peak maximum of the aligned target peak of the step (c) linearly with the peak maximum, and resampling the moved data points at the x coordinates of the initial single-scan (SS) spectra ;
(e) repeating the steps (b) to (d-1) or the steps (b) to (d-2) until no target peak is identified in the step (b) and generating a corrected SS spectrum;
(f) repeating the step (e) for each single-scan (SS) spectrum to produce the plurality of the corrected SS spectra; and
(g) integrating the plurality of the corrected SS spectra of step (f) and thereby generating the high-resolution and high-quality spectrum.

Before commencing the present method, a plurality of SS spectra are obtained from a spectrometer, which may be a mass spectrometer (*e*.*g*., a time-of-flight mass spectrometer or a magnetic spectrometer); an optical (*i.e.,* absorption, fluorescence, scattering, emission, phosphorescence) spectrometer in a range of ultraviolet, visible or infrared light; a nuclear magnetic resonance spectrometer; an ion-mobility spectrometer; a Rutherford backscattering instrument; a neutron triple-axis spectrometer; and a Raman spectrometer. According to one preferred example of the present disclosure, the SS spectra are from a mass spectrometer. In one working example of the present disclosure, the plurality of SS spectra are respectively from a MALDI-TOF mass spectrometer, and each spectrum contains errors.

To start with, in the step (a), a reference spectrum is provided, in which the reference spectrum may be from any source (*e.g*., other batches of the experiment performed on the same target protein of interest), or may be generated by integrating the plurality of SS spectra in the same batch of the experiment. In one preferred embodiment, the reference spectrum is generated by integrating the plurality of SS spectra. The resulting reference spectrum has a plurality of peaks, and the peaks with the maximum intensity (the y coordinate) above a pre-determined threshold of SNR in the reference spectrum (*i*.*e*., the reference peaks) are extracted to generate a reference peak list, wherein the pre-determined SNR threshold (signal: noise) may be from about 1.1:1 to 1000:1, for example, 1.1:1, 1.2:1, 1.3:1, 1.4:1, 1.5:1, 2:1, 2.5:1, 3:1, 3.5:1, 4:1, 4.5:1, 5:1, 5.5:1, 6:1, 6.5:1, 7:1, 7.5:1, 8:1, 8.5:1, 9:1, 9.5:1, 10:1, 11:1, 12:1, 13:1, 14:1, 15:1, 16:1, 17:1, 18:1, 19:1, 20:1, 21:1, 22:1, 23:1, 24:1, 25:1, 26:1, 27:1, 28:1, 29:1, 30:1, 31:1, 32:1, 33:1, 34:1, 35:1, 36:1, 37:1, 38:1, 39:1, 40:1, 41:1, 42:1, 43:1, 44:1, 45:1, 46:1, 47:1, 48:1, 49:1, 50:1, 51:1, 52:1, 53:1, 54:1, 55:1, 56:1, 57:1, 58:1, 59:1, 60:1, 61:1, 62:1, 63:1, 64:1, 65:1, 66:1, 67:1, 68:1, 69:1, 70:1, 71:1, 72:1, 73:1, 74:1, 75:1, 76:1, 77:1, 78:1, 79:1, 80:1, 81:1, 82:1, 83:1, 84:1, 85:1, 86:1, 87:1, 88:1, 89:1, 90:1, 91:1, 92:1, 93:1, 94:1, 95:1, 96:1, 97:1, 98:1, 99:1, 100:1, 200:1, 300:1, 400:1, 500:1, 600:1, 700:1, 800:1, 900:1, or 1000:1. In one working example, the SNR threshold is 3:1.

Next, proceed to find a target peak in a SS spectrum that meets certain criteria described bellowed (step (b)). The SS spectrum may or may not be one of the plurality of SS spectra used for integration into the reference spectrum. Each target peak in the SS spectrum has its own x and y coordinates. In step (b), an eligible target peak meets the criteria of being found within a first interval (Δe), wherein the first interval (Δe) is determined by the width of a corresponding reference peak in the reference spectrum at 1-99% of the peak height (the y coordinate), for example, 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99%, or determined arbitrarily by the user. In one working example, the first interval (Δe) is the width of the reference peak at 50% of the peak height. Furthermore, an eligible target peak should have its maximum intensity (the y coordinate) above the background noise to avoid the inclusion of background noise into the calibration by the DDC method of the present disclosure. If more than one peaks are eligible within Δe, then selecting the highest peak as the target peak will give the best result in most cases that can be obtained by the DDC method of the present disclosure. Alternatively, if more than one peaks are found within the first interval (Δe), then selecting the one closest to the reference peak as the target peak may be applicable in the present method as well.

In the step (c), the found target peak of the step (b) is aligned with the corresponding reference peak. In some embodiments, the peak maximum of the target peak may be aligned with the peak maximum of the corresponding reference peak (the situation 1). In other embodiments, the peak maximum of the target peak may be aligned with the point other than the peak maximum of the corresponding reference peak (or the point other than the peak maximum of the target peak may be aligned with the peak maximum of the corresponding reference peak; the situation 2). In still other embodiments, the point other than the peak maximum of the target peak may be aligned with the point other than the peak maximum of the corresponding reference peak (the situation 3). Reference is now made to FIG. 1, which is a schematic illustration on how steps (c) to (e) of the present DDC method are performed. In the case when the peak maximum of the target peak is aligned with the peak maximum of the corresponding reference peak (*i.e*., the situation 1), the process is as depicted in FIG. 1, panel (b). In the case when the peak maximum of the target peak is not aligned with the peak maximum of the corresponding reference peak (including the situations 2 or 3), the peak maximum or the point of the target peak at 1-99% of the peak height (either on the left lateral or the right lateral) may be aligned with the point of the reference peak at 1-99% of the peak height (either on the left lateral or the right lateral); both of which are such as 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99% of the peak height.

Other alignment approaches between the target peak and the corresponding reference peak may also be deployed in the present DDC method. For example, the center of the width of the target peak at a certain peak height (*e.g*., 1-100% of peak height) may be aligned with the center of the width of the reference peak at a certain peak height (*e.g.,* 1-99% of peak height). Both the certain peak height as described in the target peak and the reference peak may be 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99% of the peak height, and 100% of the peak height in the target peak. In one working example, the center of the width of the target peak at 100% of peak height (*i.e*., the peak maximum) is aligned with the center of the width of the reference peak at 80% of the peak height. After the target peak is aligned with the corresponding reference peak in any case, the data points of the target peak are adjusted via the means described in step (d-1) or (d-2).

In order to adjust the data density of the remainder of the target peak, a second interval Δb is defined arbitrarily, in which the Δb and the Δe described above may or may not share the same center position, while the interval of the Δb may be equal to or greater than that of the Δe (as described below) as depicted in FIG. 1, panel (a). The Δb, which is equal to or greater than the Δe, creates a buffer region that allows changes in data density during the calibration by the present DDC method (FIG. 1, panel (c)). According to some embodiments, the Δb is determined based on the width of the reference peak at a certain peak height (which can be defined by a threshold signal intensity). In some embodiments, the Δb is about 1-5 folds greater than the Δe, for example, Δb is about 1, 1.1, 1.2, 1.3, 1.4, 1.5, 1.6, 1.7, 1.8, 1.9, 2.0, 2.1, 2.2, 2.3, 2.4, 2.5, 2.6, 2.7, 2.8, 2.9, 3.0, 3.5, 4.0, 4.5, or 5.0 folds greater than the Δe. In one working example, the Δb is 1.5 folds greater than the Δe. Then, the data points that are independently above a threshold relative to the peak maximum of the target peak within the Δb are adjusted via interpolation and then, all data points are resampled to the first x coordinate (*i.e*., the step (d-1)). The threshold for the data points as described above may be 1-99% of the peak maximum of the target peak, such as 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99% of the peak maximum of the target peak; preferably, 1% of the peak maximum of the target peak; more preferably, 20% of the peak maximum of the target peak; even more preferably, 50% of the peak maximum of the target peak. In certain embodiments, the threshold for the data points is 1% of the peak maximum of the target peak. In certain embodiments, the threshold for the data points is 20% of the peak maximum of the target peak.

Exemplary interpolations that can be used to calculate the data points of the target peak include, but are not limited to, piecewise constant interpolation (*e*.*g*., nearest neighbor interpolation, linear interpolation, quadratic interpolation, cubic interpolation, monotone cubic interpolation, spline interpolation, Catmull-Rom spline interpolation, bilinear interpolation, bicubic interpolation); polynomial interpolation (*e*.*g*., polynomial interpolation, vandermonde matrix, Lagrange interpolation, Newton interpolation, Neville interpolation); and, weighted average interpolation (*e*.*g*., radial basis function interpolation, B-spline interpolation, inverse distance weighting interpolation (Shepard interpolation)). In one working example, the data points of the target peak within the Δb other than the data point of the center of the target peak (*i.e*., peak maximun) are calculated by spline interpolation (FIG. 1, panel (d)), which is a form of interpolation where the interpolant is a piecewise polynomial, a spline. In another example, the interpolation can be performed using equally-spaced, weighted-averaged, polynomial regression methods, or others.

Alternatively, after the found target peak of the step (b) is aligned with the corresponding reference peak generated in the step (c), data points that are independently above a threshold relative to the peak maximum in the aligned target peak are moved linearly with the peak maximum to the first x coordinate (*i.e.,* the step (d-2)). The threshold for the data points are as described above. By the manner described in the steps (d-1) or (d-2), the position of the data points of the target peak within the Δb aligned in the step (c) are resampled (or associated) with its original x coordinate. Thus, the corrected target peaks and the entire corrected SS spectrum can be analyzed or processed using conventional data analysis approaches, as they preserve the original x coordinates after being processed by the present DDC method.

Then, the steps (b) to (d-1) or the steps (b) to (d-2) may be repeated to find and correct the next target peak in the same SS spectrum, until no more target peak in the same SS spectrum may be identified, thereby generates a corrected SS spectrum (*i.e*., the step (e)).

Next, the step (e) may be repeated a plurality of times to generate a plurality of the corrected SS spectra (*i.e.,* in the step (f)). A schematic illustration of a plurality SS spectra before (panel (a)) and after (panel (b)) being subjected to the treatment of the present DDC method is provided in FIG. 2. As depicted in FIG. 2, panel (b), the errors in the SS spectra are greatly reduced. These corrected SS spectra may then be integrated to produce an integrated high-resolution and high-quality spectrum (step (h)) (see FIG. 2, panel (b)).

### 2.2 Apparatus for executing the present DDC method

This invention also encompasses an apparatus for executing the present DDC method and thereby generating a high-resolution and high-quality spectrum. The apparatus comprises a processor, and a tangible memory operably linked to the processor. The tangible memory is configured to store spectra and instructions for implementing the present DDC method, while the processor is configured to execute the instructions stored in the tangible memory by implementing the actions of:
(a) providing a reference spectrum;
(b) finding a target peak consisting of a plurality of data points with each of the data points having a x coordinate from one of the plurality of SS spectra within a first interval (Δe), in which the first interval (Δe) is determined by the width of a corresponding reference peak in the reference spectrum at 1-99% of the reference peak height;
(c) aligning the found target peak of the step (b) with the corresponding reference peak;
(d-1) by moving the data points that are independently above a threshold relative to the peak maximum of the aligned target peak of the step (c) via interpolation, and resampling the moved data points at the x coordinates of the initial single-scan (SS) spectra; or
(d-2) by moving the data points that are independently above a threshold relative to the peak maximum in the aligned target peak of the step (c) linearly with the peak maximum, and resampling the moved data points at the x coordinates of the initial single-scan (SS) spectra;
(e) repeating the steps (b) to (d-1) or the steps (b) to (d-2) until no target peak is identified in the step (b) and generating a corrected SS spectrum;
(f) repeating the step (e) for each single-scan (SS) spectrum to produce the plurality of the corrected SS spectra; and
(g) integrating the plurality of the corrected SS spectra of step (f) and thereby generating the high-resolution and high-quality spectrum.

According to some embodiments of the present disclosure, the tangible memory may be a removable or non-removable memory component. Examples of memory component suitable for use in the present apparatus include, but are not limited to, a random access memory (RAM), a read-only memory (ROM), a flash memory (e.g., a secure digital (SD) memory card, a mini-SD memory card, and/or a micro-SD memory card), a magnetic memory, an optical memory, a universal serial bus (USB) memory devices, a hard disk memory, an external memory, and other types of computer-readable storage media. In implementation, the memory of the present disclosure may include a removable integrated circuit card (ICC) memory, such as a memory provided by a subscriber identity module (SIM) card, a universal subscriber identity module (USIM) card, a universal integrated circuit card (UICC), etc. In some embodiments, the memory of the present disclosure is a RAM. In other embodiments, the tangible memory is a hard disc. According to embodiments of the present disclosure, one or more tangible memories may be present in the present apparatus, and the memories for processing and storing the spectra may be same or different. In some embodiments, the spectra need to be processed and the spectra having been processed are stored in one memory, while instructions for executing the DDC method (*i.e*., the method for processing said spectra) are stored in another memory. In other embodiments, both the spectra and the instructions are stored in the same memory component.

Exemplary processor suitable for executing instructions stored in the tangible memory so that the present DDC method described above is implemented include, but is not limited to, central processing unit (CPU), graphics processing unit (GPU), tensor processing unit (TPU), neural processing unit (NPU), physics processing unit (PPU), digital signal processor (DSP), image signal processor (ISP), synergistic processing element (SPU or SPE), and field-programmable gate array (FPGA). In one embodiment, the processor of the present disclosure is a GPU.

The following Examples are provided to elucidate certain aspects of the present invention and to aid those of skilled in the art in practicing this invention. These Examples are in no way to be considered to limit the scope of the invention in any manner. Without further elaboration, it is believed that one skilled in the art can, based on the description herein, utilize the present invention to its fullest extent.

### EXAMPLES

### Example 1 Correction on the mass spectra of P14R obtained by the MALDI-TOF MS

The instant example was to investigate the effect of the present DDC method may have on improving the spectral quality, such as RP, accuracy, and signal intensity of an analytical spectrum. Results are illustrated in FIG. 3.

Reference is first made to FIG. 3, panel (a), which was a mass spectrum after integration of 50 uncorrected SS spectra of a polypeptide standard P14R (MW=1532.12) obtained from a MALDI-TOF mass spectrometer. The mass spectrometer was operated in a high-resolution mode, with the condition of an ion acceleration voltage of 23 kV, an extraction voltage of 1.5 kV, and an extraction delay of 892 ns. The spectrum contained roughly 5 peaks after integration of 50 uncorrected SS spectra, which were positioned around 1534, 1535, 1536, 1537, and 1538 m/z, respectively. The peak width (FWHM) was about 0.038 m/z, which corresponded to a mass resolving power (MRF) of about 40,000, and the highest peak had a signal intensity of 892 in an arbitrary unit.

Referring now to FIG. 3, panel (b), which is a corrected spectrum after integration of the 50 SS spectra with each spectrum being corrected by the DDC method of the present disclosure. The corrected spectrum exhibited significantly improved MRP and signal intensity. In this spectrum, 5 target peaks were identified and corrected sequentially by the present DDC. After correction, the peak width was roughly 0.024 m/z, which corresponded to a MRP of about 65,000, and the signal intensity of the highest peak was 931 in the arbitrary unit. The resulted spectrum confirmed that the present DDC method greatly enhanced the MRP, and slightly improves the SNR. In this example, the relative isotope ratio of the spectrum is also improved by the DDC method. For example, the standard deviation of the relative signal intensity of the first heavy isotope reduces by more than one order of magnitude.

FIG. 4 provides another example using the present DDC method to improve the resolution and the accuracy of the MS spectra, in which panels (a) and (b) depicted the mass spectra of bradykinin before and after processed by the present DDC method with the following correction parameters: (a) aligning the center of the width of the target peak at 100% of peak height (*i.e.,* the peak maximum) with the center of the width of the reference peak at 80% peak height, and (b) defining the Δb using the width of the data points with a threshold signal intensity above 4 (an arbitrary unit) of the reference peak. These results suggest that the high-resolution and high-quality spectra may be obtained using the present DDC method with various correction parameters.

In conclusion, the DDC method provided herein is useful in minimizing errors thereby improving the resolving power (RP), accuracy, and signal intensity of a mass spectrum. Since errors are promptly corrected in every SS spectrum, the DDC method is a semi-real-time correction method. Moreover, the method is especially effective to deal with high resolution spectroscopy data. This method can enhance RP by more than 50% for most spectroscopy data. The method is simple and can be performed with high speed for on-line and off-line analysis, and it also can be integrated into most commercial analytical instrument as well without causing extra hardware cost.

It will be understood that the above description of embodiments is given by way of example only and that various modifications may be made by those with ordinary skill in the art. The above specification, examples and data provide a complete description of the structure and use of exemplary embodiments of the invention. Although various embodiments of the invention have been described above with a certain degree of particularity, or with reference to one or more individual embodiments, those with ordinary skill in the art could make numerous alterations to the disclosed embodiments.

## Claims

1. A computer implemented method for generating a high-resolution spectrum from a plurality of single-scan (SS) spectra, comprising:
(a) providing a reference spectrum;
(b) finding a target peak consisting of a plurality of data points with each of the data points having a x coordinate from one of the plurality of SS spectra within a first interval (Δe), in which the first interval (Δe) is determined by the width of a corresponding reference peak in the reference spectrum at 1-99% of the reference peak height;
(c) aligning the found target peak of the step (b) with the corresponding reference peak;
(d-1) by moving the data points that are independently above a threshold relative to the peak maximum of the aligned target peak of the step (c) via interpolation, and resampling the moved data points at the x coordinates of the initial single-scan (SS) spectra; or
(d-2) by moving the data points that are independently above a threshold relative to the peak maximum of the aligned target peak of the step (c) linearly with the peak maximum, and resampling the moved data points at the x coordinates of the initial single-scan (SS) spectra;
(e) repeating the steps (b) to (d-1) or the steps (b) to (d-2) until no target peak is found in the step (b) and generating a corrected SS spectrum;
(f) repeating the step (e) for each single-scan (SS) spectrum to produce the plurality of the corrected SS spectra; and
(g) integrating the plurality of the corrected SS spectra of step (f) and thereby generating the high-resolution spectrum.

2. The method of claim 1, wherein in the step (a), the reference spectrum is generated by integrating the plurality of SS spectra.

3. The method of claim 1, wherein in the step (b), if more than one peaks are found within the first interval (Δe), then select the one with the highest intensity as the target peak.

4. The method of claim 1, wherein in the step (b), if more than one peaks are found within the first interval (Δe), then select the one closest to the reference peak as the target peak.

5. The method of claim 1, wherein in the step (c), the peak maximum of the found target peak of the step (b) is aligned with the peak maximum of the corresponding reference peak.

6. The method of claim 1, wherein in the step (c), the peak maximum of the found target peak of the step (b) is aligned with the center of the width of the reference peak at 1-99% of the peak height.

7. The method of claim 6, wherein in the step (c), the peak maximum of the found target peak of the step (b) is aligned with the center of the width of the reference peak at 80% of the peak height.

8. The method of claim 1, wherein in the steps (d-1) or (d-2), only the data points of the target peak in a second interval (Δb) are used in the interpolation, in which the second interval (Δb) is greater or equal to the first interval (Δe).

9. The method of claim 1, wherein the interpolation of the step (d-1) is spline interpolation.

10. The method of claim 1, wherein the threshold is 1% of the peak maximum of the aligned target peak of the step (c).

11. The method of claim 10, wherein the threshold is 20% of the peak maximum of the aligned target peak of the step (c).

12. The method of claim 1, wherein each of the plurality of SS spectra is a mass spectrum, an optical spectrum, a nuclear magnetic resonance spectrum, an ion-mobility spectrum, a Rutherford backscattering spectrum, a neutron triple-axis spectrum, or a Raman spectrum.

13. An apparatus for generating a high-resolution spectrum comprising a processor, and a tangible memory operably linked to the processor, wherein
the tangible memory is configured to store spectra and instructions to generate the high-resolution spectrum; and
the processor is configured to execute the instructions stored in the tangible memory by implementing the actions of:
(a) providing a reference spectrum;
(b) finding a target peak consisting of a plurality of data points with each of the data points having a x coordinate from one of the plurality of SS spectra within a first interval (Δe), in which the first interval (Δe) is determined by the width of a corresponding reference peak in the reference spectrum at 1-99% of the reference peak height;
(c) aligning the found target peak of the step (b) with the corresponding reference peak;
(d-1) by moving the data points that are independently above a threshold relative to the peak maximum of the aligned target peak of the step (c) via interpolation, and resampling the moved data points at the x coordinates of the initial single-scan (SS) spectra; or
(d-2) by moving the data points that are independently above a threshold relative to the peak maximum of the aligned target peak of the step (c) linearly with the peak maximum, and resampling the moved data points at the x coordinates of the initial single-scan (SS) spectra;
(e) repeating the steps (b) to (d-1) or the steps (b) to (d-2) until no target peak is found in the step (b) and generating a corrected SS spectrum;
(f) repeating the step (e) for each single-scan (SS) spectrum to produce the plurality of the corrected SS spectra; and
(g) integrating the plurality of the corrected SS spectra of step (f) and thereby generating the high-resolution spectrum.

14. The apparatus of claim 13, wherein in the step (a), the reference spectrum is generated by integrating the plurality of SS spectra stored in the tangible memory.

15. The apparatus of claim 13, wherein in the step (b), if more than one peaks are found within the first interval (Δe), then select the one with the highest intensity as the target peak.

16. The apparatus of claim 13, wherein in the step (b), if more than one peaks are found within the first interval (Δe), then select the one closest to the reference peak as the target peak.

17. The apparatus of claim 13, wherein in the step (c), the peak maximum of the found target peak of the step (b) is aligned with the peak maximum of the corresponding reference peak.

18. The apparatus of claim 13, wherein in the step (c), the peak maximum of the found target peak of the step (b) is aligned with the center of the width of the reference peak at 1-99% of the peak height.

19. The apparatus of claim 18, wherein in the step (c), the peak maximum of the found target peak of the step (b) is aligned with the center of the width of the reference peak at 80% of the peak height.

20. The apparatus of claim 13, wherein in the steps (d-1) or (d-2), only the data points of the target peak in a second interval (Δb) are used in the interpolation, in which the second interval (Δb) is greater or equal to the first interval (Δe).

21. The apparatus of claim 13, wherein the interpolation of the step (d-1) is spline interpolation.

22. The apparatus of claim 13, wherein the threshold is 1% of the peak maximum of the aligned target peak of the step (c).

23. The apparatus of claim 22, wherein the threshold is 20% of the peak maximum of the aligned target peak of the step (c).

24. The apparatus of claim 13, wherein the SS spectra is a mass spectrum, an optical spectrum, a nuclear magnetic resonance spectrum, an ion-mobility spectrum, a Rutherford backscattering spectrum, a neutron triple-axis spectrum, or a Raman spectrum.

## Patentansprüche

1. Computerimplementiertes Verfahren zur Erzeugung eines hochauflösenden Spektrums aus einer Vielzahl von Einzelscan (SS) - Spektren, welches umfasst:
(a) Bereitstellen eines Referenzspektrums;
(b) Finden eines Zielpeaks, der aus einer Vielzahl von Datenpunkten besteht, wobei jeder der Datenpunkte eine x-Koordinate aus einem der Vielzahl von SS-Spektren innerhalb eines ersten Intervalls (Δe) aufweist, wobei das erste Intervall (Δe) durch die Breite eines korrespondierenden Referenzpeaks in dem Referenzspektrum bei 1-99 % der Referenzpeakhöhe bestimmt wird;
(c) Ausrichten des gefundenen Zielpeaks aus dem Schritt (b) mit dem korrespondierenden Referenzpeak;
(d-1) durch Verschieben der Datenpunkte, die unabhängig voneinander über einem Schwellenwert relativ zu dem Peakmaximum des ausgerichteten Zielpeaks aus dem Schritt (c) liegen, mittels Interpolation, und Neuabtastung der verschobenen Datenpunkte an den x-Koordinaten der ursprünglichen Einzelscan (SS) - Spektren; oder
(d-2) durch Verschieben der Datenpunkte, die unabhängig voneinander über einem Schwellenwert relativ zu dem Peakmaximum des ausgerichteten Zielpeaks aus dem Schritt (c) liegen, linear mit dem Peakmaximum, und Neuabtastung der verschobenen Datenpunkte an den x-Koordinaten der ursprünglichen Einzelscan (SS) - Spektren;
(e) Wiederholen der Schritte (b) bis (d-1) oder der Schritte (b) bis (d-2) bis in dem Schritt (b) kein Zielpeak gefunden wird, und Erzeugen eines korrigierten SS-Spektrums;
(f) Wiederholen von Schritt (e) für jedes Einzelscan (SS) - Spektrum, um eine Vielzahl korrigierter SS-Spektren zu erzeugen; und
(g) Integrieren der Vielzahl korrigierter SS-Spektren aus Schritt (f) und dadurch Erzeugen des hochauflösenden Spektrums.

2. Verfahren nach Anspruch 1, bei welchem in dem Schritt (a) das Referenzspektrum durch Integration der Vielzahl von SS-Spektren erzeugt wird.

3. Verfahren nach Anspruch 1, bei welchem in dem Schritt (b), falls innerhalb des ersten Intervalls (Δe) mehr als ein Peak gefunden wird, dann derjenige mit der höchsten Intensität als der Zielpeak ausgewählt wird.

4. Verfahren nach Anspruch 1, bei welchem in dem Schritt (b), falls innerhalb des ersten Intervalls (Δe) mehr als ein Peak gefunden wird, dann derjenige, der dem Referenzpeak am nächsten liegt, als der Zielpeak ausgewählt wird.

5. Verfahren nach Anspruch 1, bei welchem in dem Schritt (c) das Peakmaximum des gefundenen Zielpeaks aus dem Schritt (b) an dem Peakmaximum des korrespondierenden Referenzpeaks ausgerichtet wird.

6. Verfahren nach Anspruch 1, bei welchem in dem Schritt (c) das Peakmaximum des gefundenen Zielpeaks aus dem Schritt (b) an der Mitte der Breite des Referenzpeaks bei 1-99% der Peakhöhe ausgerichtet wird.

7. Verfahren nach Anspruch 6, bei welchem in dem Schritt (c) das Peakmaximum des gefundenen Zielpeaks aus dem Schritt (b) an der Mitte der Breite des Referenzpeaks bei 80% der Peakhöhe ausgerichtet wird.

8. Verfahren nach Anspruch 1, bei welchem in den Schritten (d-1) oder (d-2) nur die Datenpunkte des Zielpeaks in einem zweiten Intervall (Δb) in der Interpolation verwendet werden, wobei das zweite Intervall (Δb) größer oder gleich dem ersten Intervall (Δe) ist.

9. Verfahren nach Anspruch 1, bei welchem die Interpolation des Schrittes (d-1) eine Spline-Interpolation ist.

10. Verfahren nach Anspruch 1, bei welchem der Schwellenwert 1% des Peakmaximums des ausgerichteten Zielpeaks aus dem Schritt (c) beträgt.

11. Verfahren nach Anspruch 10, bei welchem der Schwellenwert 20% des Peakmaximums des ausgerichteten Zielpeaks aus dem Schritt (c) beträgt.

12. Verfahren nach Anspruch 1, bei welchem jedes der Vielzahl von SS-Spektren ein Massenspektrum, ein optisches Spektrum, ein Kernmagnetresonanzspektrum, ein lonenmobilitätsspektrum, ein Rutherford-Rückstreuspektrum, ein Neutronen-Dreiachsenspektrum oder ein Raman-Spektrum ist.

13. Vorrichtung zur Erzeugung eines hochauflösenden Spektrums, welche einen Prozessor und einen mit dem Prozessor operativ verbundenen materiellen Speicher umfasst, wobei
der materielle Speicher konfiguriert ist, um Spektren und Anweisungen zur Erzeugung des hochauflösenden Spektrums zu speichern; und
der Prozessor konfiguriert ist, um die in dem materiellen Speicher gespeicherten Anweisungen durch Implementierung der folgenden Aktionen auszuführen:
(a) Bereitstellen eines Referenzspektrums;
(b) Finden eines Zielpeaks, der aus einer Vielzahl von Datenpunkten besteht, wobei jeder der Datenpunkte eine x-Koordinate aus einem der Vielzahl von SS-Spektren innerhalb eines ersten Intervalls (Δe) aufweist, wobei das erste Intervall (Δe) durch die Breite eines korrespondierenden Referenzpeaks in dem Referenzspektrum bei 1-99 % der Referenzpeakhöhe bestimmt wird;
(c) Ausrichten des gefundenen Zielpeaks aus dem Schritt (b) mit dem korrespondierenden Referenzpeak;
(d-1) durch Verschieben der Datenpunkte, die unabhängig voneinander über einem Schwellenwert relativ zu dem Peakmaximum des ausgerichteten Zielpeaks aus dem Schritt (c) liegen, mittels Interpolation, und Neuabtastung der verschobenen Datenpunkte an den x-Koordinaten der ursprünglichen Einzelscan (SS) - Spektren; oder
(d-2) durch Verschieben der Datenpunkte, die unabhängig voneinander über einem Schwellenwert relativ zu dem Peakmaximum des ausgerichteten Zielpeaks aus dem Schritt (c) liegen, linear mit dem Peakmaximum, und Neuabtastung der verschobenen Datenpunkte an den x-Koordinaten der ursprünglichen Einzelscan (SS) - Spektren;
(e) Wiederholen der Schritte (b) bis (d-1) oder der Schritte (b) bis (d-2) bis in dem Schritt (b) kein Zielpeak gefunden wird, und Erzeugen eines korrigierten SS-Spektrums;
(f) Wiederholen von Schritt (e) für jedes Einzelscan (SS) - Spektrum, um eine Vielzahl korrigierter SS-Spektren zu erzeugen; und
(g) Integrieren der Vielzahl korrigierter SS-Spektren aus Schritt (f) und dadurch Erzeugen des hochauflösenden Spektrums.

14. Vorrichtung nach Anspruch 13, bei welcher in dem Schritt (a) das Referenzspektrum durch Integration der Vielzahl von in dem materiellen Speicher gespeicherten SS-Spektren erzeugt wird.

15. Vorrichtung nach Anspruch 13, bei welcher in dem Schritt (b), falls innerhalb des ersten Intervalls (Δe) mehr als ein Peak gefunden wird, dann derjenige mit der höchsten Intensität als der Zielpeak ausgewählt wird.

16. Vorrichtung nach Anspruch 13, bei welcher in dem Schritt (b), falls innerhalb des ersten Intervalls (Δe) mehr als ein Peak gefunden wird, dann derjenige, der dem Referenzpeak am nächsten liegt, als der Zielpeak ausgewählt wird.

17. Vorrichtung nach Anspruch 13, bei welcher in dem Schritt (c) das Peakmaximum des gefundenen Zielpeaks aus dem Schritt (b) an dem Peakmaximum des korrespondierenden Referenzpeaks ausgerichtet wird.

18. Vorrichtung nach Anspruch 13, bei welcher in dem Schritt (c) das Peakmaximum des gefundenen Zielpeaks aus dem Schritt (b) an der Mitte der Breite des Referenzpeaks bei 1-99% der Peakhöhe ausgerichtet wird.

19. Vorrichtung nach Anspruch 18, bei welcher in dem Schritt (c) das Peakmaximum des gefundenen Zielpeaks aus dem Schritt (b) an der Mitte der Breite des Referenzpeaks bei 80% der Peakhöhe ausgerichtet wird.

20. Vorrichtung nach Anspruch 13, bei welcher in den Schritten (d-1) oder (d-2) nur die Datenpunkte des Zielpeaks in einem zweiten Intervall (Δb) in der Interpolation verwendet werden, wobei das zweite Intervall (Δb) größer oder gleich dem ersten Intervall (Δe) ist.

21. Vorrichtung nach Anspruch 13, bei welcher die Interpolation des Schrittes (d-1) eine Spline-Interpolation ist.

22. Vorrichtung nach Anspruch 13, bei welcher der Schwellenwert 1% des Peakmaximums des ausgerichteten Zielpeaks aus dem Schritt (c) beträgt.

23. Vorrichtung nach Anspruch 22, bei welcher der Schwellenwert 20% des Peakmaximums des ausgerichteten Zielpeaks aus dem Schritt (c) beträgt.

24. Vorrichtung nach Anspruch 13, bei welcher das SS-Spektrum ein Massenspektrum, ein optisches Spektrum, ein Kernmagnetresonanzspektrum, ein lonenmobilitätsspektrum, ein Rutherford-Rückstreuspektrum, ein Neutronen-Dreiachsenspektrum oder ein Raman-Spektrum ist.

## Revendications

1. Procédé mis en œuvre par ordinateur pour générer un spectre haute résolution à partir d'une pluralité de spectres à balayage unique (SS), comprenant :
(a) la fourniture d'un spectre de référence ;
(b) le fait de trouver un pic cible consistant en une pluralité de points de données, chacun des points de données présentant une coordonnée x provenant de l'un de la pluralité de spectres SS dans un premier intervalle (Δe), dans lequel le premier intervalle (Δe) est déterminé par la largeur d'un pic de référence correspondant dans le spectre de référence à 1-99 % de la hauteur de pic de référence ;
(c) l'alignement du pic cible trouvé à l'étape (b) sur le pic de référence correspondant ;
(d-1) le déplacement des points de données qui sont indépendamment au-dessus d'un seuil par rapport au maximum de pic du pic cible aligné à l'étape (c) par interpolation et le rééchantillonnage des points de données déplacés au niveau des coordonnées x des spectres à balayage unique (SS) initiaux ; ou
(d-2) le déplacement des points de données qui sont indépendamment au-dessus d'un seuil par rapport au maximum de pic du pic cible aligné à l'étape (c) linéairement avec le maximum de pic et le rééchantillonnage des points de données déplacés au niveau des coordonnées x des spectres à balayage unique (SS) initiaux ;
(e) la répétition des étapes (b) à (d-1) ou des étapes (b) à (d-2) jusqu'à ce qu'aucun pic cible ne soit trouvé à l'étape (b) et la génération d'un spectre SS corrigé ;
(f) la répétition de l'étape (e) pour chaque spectre à balayage unique (SS) afin de produire la pluralité de spectres SS corrigés ; et
(g) l'intégration de la pluralité de spectres SS corrigés à l'étape (f) et ainsi la génération du spectre haute résolution.

2. Procédé selon la revendication 1, dans lequel, à l'étape (a), le spectre de référence est généré par l'intégration de la pluralité de spectres SS.

3. Procédé selon la revendication 1, dans lequel, à l'étape (b), si plus d'un pic est trouvé dans le premier intervalle (Δe), alors celui présentant l'intensité la plus élevée est sélectionné comme pic cible.

4. Procédé selon la revendication 1, dans lequel, à l'étape (b), si plus d'un pic est trouvé dans le premier intervalle (Δe), alors celui qui est le plus proche du pic de référence est sélectionné comme pic cible.

5. Procédé selon la revendication 1, dans lequel, à l'étape (c), le maximum de pic du pic cible trouvé à l'étape (b) est aligné avec le maximum de pic du pic de référence correspondant.

6. Procédé selon la revendication 1, dans lequel, à l'étape (c), le maximum de pic du pic cible trouvé à l'étape (b) est aligné avec le centre de la largeur du pic de référence à 1-99 % de la hauteur de pic.

7. Procédé selon la revendication 6, dans lequel, à l'étape (c), le maximum de pic du pic cible trouvé à l'étape (b) est aligné avec le centre de la largeur du pic de référence à 80 % de la hauteur de pic.

8. Procédé selon la revendication 1, dans lequel, à l'étape (d-1) ou (d-2), seuls les points de données du pic cible dans un second intervalle (Δb) sont utilisés dans l'interpolation, dans lequel le second intervalle (Δb) est supérieur ou égal au premier intervalle (Δe).

9. Procédé selon la revendication 1, dans lequel l'interpolation à l'étape (d-1) est une interpolation par spline.

10. Procédé selon la revendication 1, dans lequel le seuil est 1 % du maximum de pic du pic cible aligné à l'étape (c).

11. Procédé selon la revendication 10, dans lequel le seuil est 20 % du maximum de pic du pic cible aligné à l'étape (c).

12. Procédé selon la revendication 1, dans lequel chacun de la pluralité de spectres SS est un spectre de masse, un spectre optique, un spectre de résonance magnétique nucléaire, un spectre de mobilité ionique, un spectre de rétrodiffusion de Rutherford, un spectre à trois axes de neutrons ou un spectre Raman.

13. Appareil permettant de générer un spectre haute résolution comprenant un processeur et une mémoire tangible reliée de manière opérationnelle au processeur, dans lequel
la mémoire tangible est configurée pour stocker des spectres et des instructions pour générer le spectre haute résolution ; et
le processeur est configuré pour exécuter les instructions stockées dans la mémoire tangible en mettant en œuvre les actions suivantes :
(a) la fourniture d'un spectre de référence ;
(b) le fait de trouver un pic cible consistant en une pluralité de points de données, chacun des points de données présentant une coordonnée x provenant de l'un de la pluralité de spectres SS dans un premier intervalle (Δe), dans lequel le premier intervalle (Δe) est déterminé par la largeur d'un pic de référence correspondant dans le spectre de référence à 1-99 % de la hauteur de pic de référence ;
(c) l'alignement du pic cible trouvé à l'étape (b) sur le pic de référence correspondant ;
(d-1) le déplacement des points de données qui sont indépendamment au-dessus d'un seuil par rapport au maximum de pic du pic cible aligné à l'étape (c) par interpolation et le rééchantillonnage des points de données déplacés au niveau des coordonnées x des spectres à balayage unique (SS) initiaux ; ou
(d-2) le déplacement des points de données qui sont indépendamment au-dessus d'un seuil par rapport au maximum de pic du pic cible aligné à l'étape (c) linéairement avec le maximum de pic et le rééchantillonnage des points de données déplacés au niveau des coordonnées x des spectres à balayage unique (SS) initiaux ;
(e) la répétition des étapes (b) à (d-1) ou des étapes (b) à (d-2) jusqu'à ce qu'aucun pic cible ne soit trouvé à l'étape (b) et la génération d'un spectre SS corrigé ;
(f) la répétition de l'étape (e) pour chaque spectre à balayage unique (SS) afin de produire la pluralité de spectres SS corrigés ; et
(g) l'intégration de la pluralité de spectres SS corrigés à l'étape (f) et ainsi la génération du spectre haute résolution.

14. Appareil selon la revendication 13, dans lequel, à l'étape (a), le spectre de référence est généré par l'intégration de la pluralité de spectres SS stockés dans la mémoire tangible.

15. Appareil selon la revendication 13, dans lequel, à l'étape (b), si plus d'un pic est trouvé dans le premier intervalle (Δe), alors celui présentant l'intensité la plus élevée est sélectionné comme pic cible.

16. Appareil selon la revendication 13, dans lequel, à l'étape (b), si plus d'un pic est trouvé dans le premier intervalle (Δe), alors celui qui est le plus proche du pic de référence est sélectionné comme pic cible.

17. Appareil selon la revendication 13, dans lequel, à l'étape (c), le maximum de pic du pic cible trouvé à l'étape (b) est aligné avec le maximum de pic du pic de référence correspondant.

18. Appareil selon la revendication 13, dans lequel, à l'étape (c), le maximum de pic du pic cible trouvé à l'étape (b) est aligné avec le centre de la largeur du pic de référence à 1-99 % de la hauteur de pic.

19. Appareil selon la revendication 18, dans lequel, à l'étape (c), le maximum de pic du pic cible trouvé à l'étape (b) est aligné avec le centre de la largeur du pic de référence à 80 % de la hauteur de pic.

20. Appareil selon la revendication 13, dans lequel, à l'étape (d-1) ou (d-2), seuls les points de données du pic cible dans un second intervalle (Δb) sont utilisés dans l'interpolation, dans lequel le second intervalle (Δb) est supérieur ou égal au premier intervalle (Δe).

21. Appareil selon la revendication 13, dans lequel l'interpolation à l'étape (d-1) est une interpolation par spline.

22. Appareil selon la revendication 13, dans lequel le seuil est 1 % du maximum de pic du pic cible aligné à l'étape (c).

23. Appareil selon la revendication 22, dans lequel le seuil est 20 % du maximum de pic du pic cible aligné à l'étape (c).

24. Appareil selon la revendication 13, dans lequel le spectre SS est un spectre de masse, un spectre optique, un spectre de résonance magnétique nucléaire, un spectre de mobilité ionique, un spectre de rétrodiffusion de Rutherford, un spectre à trois axes de neutrons ou un spectre Raman.
